# EUROPÄISCHE PATENTANMELDUNG

(11) **EP 1 852 375 A1**
(43) Veröffentlichungstag der Anmeldung: **07.11.2007**
(21) Anmeldenummer: 06007078.6
(22) Anmeldetag: 03.04.2006
(51) Int. Cl.: B65G 47/61

(54) **Fördervorrichtung für Behälter**

(71) Anmelder: Höcker Anlagenbau GmbH, 49134 Wallenhorst (DE)
(72) Erfinder: Höcker, Benjamin, 49082 Osnabrück (DE)
(74) Vertreter: Brandt, Detlef

(57) **Zusammenfassung**

Es wird eine Fördervorrichtung für Behälter mit einer Laufschiene (1) vorgestellt, die einen in sich geschlossenen Umlauf bildet sowie mit mehreren, beabstandet zueinander in oder an der Laufschiene (1) geführten Halterungen (2) ausgestattet ist. Die Erfindung ist dadurch gekennzeichnet, dass der Laufschiene (1) mindestens eine Zuführeinrichtung (3) zur Bereitstellung der Behälter (4) zugeordnet ist, wobei die Behälter (4) eine jeweils mindestens einer der Halterungen (2) derart zugewandte Öffnung (5) aufweisen, dass ein selbsttätiges Aufnehmen eines Behälters (4) durch den Eingriff der Halterung (2) in die Öffnung (5) des Behälters (4) ermöglicht ist, weil die Laufschiene (1) zumindest abschnittsweise eine Höhendifferenz zu der zugeordneten Zuführeinrichtung (3) aufweist.

Darüber hinaus wird ein Verfahren zur Bereitstellung eines Behälters für einen Arbeitsprozess mittels einer erfindungsgemäßen Fördervorrichtung angegeben, das folgende Verfahrensschritte aufweist
- Zuführung wenigstens eines Behälters (4) über eine Zuführeinrichtung (3) zur Bestückungsstation (15),
- Positionierung des Behälters (4), sodass die Öffnung (5) des Behälters (4) mindestens einer der Halterungen (2) zugewandt ist,
- Annäherung der Halterung (2) an die Öffnung (5) des Behälters (4) durch Überwindung einer zumindest abschnittsweise vorhandenen Höhendifferenz zwischen der Laufschiene (1) und der Zuführeinrichtung (3),
- selbsttätiges Aufnehmen des Behälters (4) durch den Eingriff der Halterung (2) in die Öffnung (5) des Behälters (4).

## Beschreibung

Die Erfindung betrifft eine Fördervorrichtung für Behälter nach dem Oberbegriff des Patentanspruches 1 sowie ein Verfahren zur Bereitstellung eines Behälters für einen Arbeitsprozess mittels einer derartigen Fördervorrichtung.

In der verarbeitenden Industrie sind die unterschiedlichsten Behälter für diverse Einsatzzwecke erforderlich, wobei diese insbesondere zur Aufbewahrung von Produkten oder Teilen von Produkten sowie zu deren Transport verwendet werden. Dabei stellt sich neben der Lagerhaltung der Behälter ein logistisches Problem, das darin besteht, die Behälter jeweils rechtzeitig und in ausreichender Anzahl an dem Arbeitsplatz zur Verfügung zu stellen, an dem sie benötigt werden. Bekannte Lösungen gehen dahin, die Behälter auf Förderbändern zu dem entsprechenden Ort des Bedarfs zu transportieren. Diese Förderbandsysteme haben jedoch einerseits den Nachteil, dass sie einen erheblichen Kostenaufwand bei der Anschaffung und auch für die Wartung mit sich bringen und andererseits sehr viel Platz beanspruchen, der für andere Zwecke dringend erforderlich wäre. Zudem erzeugen Förderbänder während ihres Betriebes eine nicht unerhebliche Geräuschkulisse, was die Arbeitsbedingungen beeinträchtigen kann. Bekannt sind zum Beispiel Rollenförderbänder, die aufgrund der Drehbewegungen der Rollen eine Beförderung der darauf befindlichen Behälter ermöglichen. An dem jeweiligen Bedarfsort wird der Behälter manuell von dem Förderband entnommen und entsprechend seinen Einsatzzwecken gefüllt beziehungsweise verwendet.

Darüber hinaus sind sehr viel wirtschaftlichere Systeme bekannt, die das eingangs bereits erwähnte Problem der Lagerhaltung der Behälter zumindest teilweise reduzieren. Gedacht ist hierbei an Hängefördereinrichtungen, die Laufschienen mit Halterungen aufweisen, an denen eine erhebliche Zahl Behälter aufgehängt werden kann. Somit ist der erforderliche Lagerplatzbedarf wesentlich geringer als bei den zuvor genannten Förderbändern. Es sind sowohl offene Hängefördersysteme im Einsatz, als auch Systeme mit einem in sich geschlossenen Umlauf.

Die Verwendung von genormten Behältern zum Transport und zur Lagerung von Produkten hat sich insbesondere in der Lebensmittelindustrie durchgesetzt. So werden beispielsweise bei der Fleischverarbeitung genormte Behälter, so genannte E1-, E2- beziehungsweise E3- Kisten, verwendet. Diese Behälter befinden sich in einem permanenten Kreislauf, der bei der Fleischzerlegung beginnt und über den Transport bis zum Verkauf der Fleischwaren führt. Anschließend gelangen die leeren Behälter wieder zurück zur Fleischzerlegung Bevor die Behälter hier erneut einer Verwendung zugeführt werden können, müssen sie gründlich gereinigt werden. Insbesondere in der Lebensmittelindustrie spielen die Hygieneanforderungen eine maßgebliche Rolle. Aus dem genannten Grund müssen die Behälter nicht nur sehr gründlich gereinigt werden, sondern bedürfen auch einer speziellen Handhabung, so dass sich während der Lagerung beziehungsweise des Transportes keine Feuchtigkeit in den Behältern sammeln oder in die Behälter gelangen darf. Insbesondere bei fehlerhafter Lagerung der Behälter ergeben sich diesbezüglich immer wieder Probleme, weil beispielsweise eine langfristige Lagerung dazu führen kann, dass einmal gereinigte Behälter erneut einer Verschmutzung unterliegen. Ferner besteht auch das Risiko einer unbeabsichtigten Verunreinigung der Behälter, wie dies beispielsweise durch Arbeitsabläufe in der Nähe der leeren Behälter oder bei deren Transport mittels bodennaher Förderbänder durch Schmutz oder Spritzwasser möglich ist.

In der DE 32 14 044 A1 wird eine Hängefördereinrichtung beschrieben, die eine Laufschiene aufweist, in die ein Kunststoffprofil eingebettet ist. Das Kunststoffprofil nimmt dabei eine flexible Förderkette auf und dient somit gleichfalls zur Führung der Förderkette. An einzelnen Gliedern der Förderkette sind Halterungen angebracht, die zum Transport von Gütern dienen können. Bei der genannten Schrift handelt es sich um ein Hängefördersystem für die Bekleidungsindustrie, so dass die genannten Halterungen als Tragbügel für Kleidungsstücke ausgestaltet sind. Somit ist eine Fördervorrichtung mit einer Laufschiene bekannt, die einen in sich geschlossenen Umlauf bildet, sowie mehrere beabstandet zueinander in oder an der Laufschiene geführte Halterungen aufweist.

Der Erfindung liegt die Aufgabe zugrunde, eine Fördervorrichtung für Behälter bereitzustellen, die weitgehend automatisiert und bedarfsgerecht Behälter aufbewahrt, transportiert und zur Verfügung stellt. Die Fördervorrichtung sollte insgesamt einfach aufgebaut und kostengünstig herstellbar sein.

Die Erfindung löst diese Aufgabenstellung mit den Merkmalen der unabhängigen Patentansprüche.

Weitere Ausgestaltungen sind in den sich jeweils anschließenden Unteransprüchen angegeben.

Eine Fördervorrichtung für Behälter mit einer Laufschiene, die einen in sich geschlossenen Umlauf bildet sowie mehrere beabstandet zueinander in oder an der Laufschiene geführte Halterungen aufweist, wird erfindungsgemäß dahingehend weitergebildet, dass der Laufschiene mindestens eine Zuführeinrichtung zur Bereitstellung der Behälter zugeordnet ist, wobei die Behälter eine jeweils mindestens einer der Halterungen derart zugewandte Öffnung aufweisen, dass ein selbsttätiges Aufnehmen eines Behälters durch den Eingriff der Halterung in die Öffnung des Behälters ermöglicht wird, weil die Laufschiene zumindest abschnittsweise eine Höhendifferenz zu der zugeordneten Zuführeinrichtung aufweist.

Mit der erfindungsgemäßen Fördervorrichtung werden zunächst die Vorteile von Hängefördersystemen genutzt, die darin zu sehen sind, dass Hängefördersysteme aufgrund der Vielzahl damit transportierbarer Behälter nur einen geringen Lagerungsbedarf für diese Behälter erfordern, so dass kostenintensive Lagerkapazitäten eingespart werden können. Ein Laufschienen aufweisendes Hängefördersystem ist auch deshalb von Vorteil, weil die Laufschienen innerhalb einer Produktionshalle flexibel verlegt werden können und auch Umlenkungen der Laufschiene mit wesentlich geringeren Radien als bei Förderbändern möglich sind. So kann mittels eines Laufschienensystems die Aufbewahrung der Behälter unmittelbar in der Fördervorrichtung erfolgen, wobei die Führung der Laufschiene beispielsweise unterhalb der Decke eines Gebäudes erfolgen kann. Somit wird der Arbeitsprozess nicht beeinträchtigt. Die Behälter werden lediglich in den Bereichen, in denen sie für den Produktionsprozess benötigt werden, dem jeweiligen Arbeitsplatz zugeführt. Die Laufschiene wird in diesen Abschnitten entsprechend abgesenkt, so dass eine Erreichbarkeit der Behälter gewährleistet ist.

Durch das selbsttätige Aufnehmen der Behälter mittels der Halterungen, ist es nicht mehr erforderlich, hierfür Personal zur Verfügung zu stellen, das die Behälter einhängen muss. Vielmehr läuft dieser Prozess nunmehr automatisiert ab. Dies bedeutet, dass jeder Behälter, der über die Zuführeinrichtung zur Verfügung gestellt wird, mittels einer Halterung selbsttätig aufgenommen wird und an der Laufschiene innerhalb der Produktionshalle umläuft, um schließlich an den Arbeitsplatz, an dem er zur Weiterverarbeitung benötigt wird, bereitgestellt zu werden. Das System bringt insgesamt erhebliche Kostenvorteile gegenüber bekannten Fördervorrichtungen mit sich, da die Laufschiene kostengünstig installiert und hergestellt werden kann. Für die zusätzlich erforderliche Zuführeinrichtung ist ein Aufwand notwendig, der verglichen mit den bekannten Transportbändern gering ist.

Gemäß einer weiteren Ausgestaltung der Erfindung wird vorgeschlagen, dass die Höhendifferenz entweder durch einen Anstieg der Laufschiene relativ zu der Zuführeinrichtung überwunden werden kann, oder dass im umgekehrten Fall die Zuführeinrichtung eine Neigung im Sinne einer Absenkung in vertikaler Richtung relativ zu der Laufschiene aufweist.

Dabei ist es wesentlich zu erkennen, dass lediglich ein Element, also entweder die Laufschiene oder die Zuführeinrichtung, in Relation zu der anderen Baueinheit die genannte Höhendifferenz ausführen muss, um die erfindungsgemäße Lösung umsetzen zu können. Natürlich ist es auch möglich, beide Systeme gegenläufig anzuordnen, so dass die Laufschiene ansteigend und die Zuführeinrichtung abfallend ausgeführt wird. Jedoch ist damit ein zusätzlicher Aufwand verbunden, der nur auf besondere Einsatzfälle beschränkt sein sollte.

Die bereits im Zusammenhang mit der Erläuterung des Standes der Technik erwähnte Ausführung, bei der die Laufschiene ein Kunststoffprofil aufweist, in dem eine Förderkette gleitend geführt wird, kann auch für die vorliegende Lösung genutzt werden. Mit einem derartigen System sind ohne weiteres Höhenunterschiede zu überwinden, weil die angetriebene Förderkette innerhalb des Kunststoffprofils geführt ist. Damit wird eine sehr einfache Lösung bereitgestellt, die im Unterschied zu der aus dem Stand der Technik bekannten Variante einfacher aufgebaut ist, weil die Erfinder erkannt haben, dass die Förderkette bereits aufgrund ihrer Führung innerhalb des Kunststoffprofils in der Lage ist, Höhenunterschiede zu überwinden. Es bedarf daher bei der erfindungsgemäßen Ausgestaltung der Laufschiene keiner zusätzlichen Bauelemente oder Baugruppen.

Die Bereitstellung der Behälter mittels der Zuführeinrichtung erfolgt in der Weise, dass die Öffnung der Behälter in den Eingriffsbereich der Halterungen gelangt oder umgekehrt. Die zuverlässige Zusammenführung von Behälter und korrespondierender Halterung erfordert eine exakte Führung der Halterungen. Problematisch ist dies insbesondere dann, wenn die Halterungen ungleichmäßig belastet sind, weil zum Beispiel eine für zwei Behälter geeignete Halterung nur einseitig einen Behälter aufweist. Für diesen Fall wird vorgeschlagen, die Laufschiene zumindest im Bereich der Behälteraufnahme mit einer bügelförmigen Führung auszustatten, die der annähernd vertikalen Positionierung der Halterung dient. Dies bedeutet, dass die Halterung zumindest im Bereich der Behälteraufnahme in die genannte Führung eingeführt oder an der Führung entlang geführt wird. Damit kann eine optimale Eingriffsfunktion der Halterung in die Öffnung des Behälters gewährleistet werden.

Entsprechend einer weiteren Ausgestaltung der Erfindung kann die Führung aus einem mit der Laufschiene verbundenen Haltebügel und mindestens einem die Halterung in die vorgesehene Position zwingenden Führungsbügel bestehen. Dabei dient der Führungsbügel der annähernd vertikalen Ausrichtung der Halterung, während der Haltebügel zur Befestigung des Führungsbügels gedacht ist. Es bedarf dabei keiner besonderen Erwähnung, dass der Führungsbügel eine Geometrie aufweist, die geeignet ist, auch eine aus ihrer vertikalen Lage ausgelenkte Halterung sicher und zuverlässig in die vorgeschriebene, annähernd vertikale Position zu verbringen. Dies bedeutet, dass der Führungsbügel eine sich in Bewegungsrichtung der in oder an der Laufschiene umlaufenden Halterung verjüngende Geometrie aufweist.

Um den Anforderungen an einen möglichst flexiblen Einsatz der erfindungsgemäßen Fördervorrichtung gerecht zu werden und Behälter für die unterschiedlichsten Zwecke mit der Fördervorrichtung aufnehmen und transportieren zu können, wird ferner vorgeschlagen, dass die Halterungen einen Träger oder Haken bilden beziehungsweise aufweisen. Somit ist ein Teil der Halterung als Haken oder Träger ausgestaltet beziehungsweise verfügt über einen derartigen Träger oder Haken. Dies hat insbesondere den Vorteil, dass eine solche Halterung hinsichtlich des Eingriffes in die Öffnung des Behälters optimiert ist.

Zur Gewährleistung einer Beweglichkeit der Halterungen ist es darüber hinaus von Vorteil, wenn diese in ihrem laufschienennahen Bereich ein Gelenk aufweisen. Ein derartiges Gelenk kann zum Beispiel als Kreuzgelenk ausgeführt sein. Somit können mehrere Bewegungsrichtungen der Halterung umgesetzt werden. Die Verwendung eines Gelenkes im laufschienennahen Bereich der Halterung ist insbesondere im Zusammenhang mit der zuvor erwähnten Führung von Vorteil, weil sich dadurch die Halterung in einfacher Weise ausrichten lässt.

Um die Förderkette innerhalb des Kunststoffprofils zu bewegen, ist zumindest ein Antrieb erforderlich. Je nach der Länge der zu bewegenden Förderkette können jedoch auch mehrere Antriebe zum Einsatz kommen. Hinsichtlich der Wahl des für die Erfindung geeigneten Antriebes ist festzuhalten, dass dieser geeignet sein sollte, die Förderkette sowohl zeitweilig als auch permanent in Bewegung zu versetzen. Ein sehr vorteilhafter Antrieb für die erfindungsgemäße Fördervorrichtung ist daher ein Elektromotor. Gegebenenfalls kann zur Reduzierung oder Anpassung der Geschwindigkeit der Drehbewegung ein hierzu geeignetes Getriebe vorgesehen werden. Bei Verwendung mehrerer Elektromotoren bietet sich ferner ein Frequenzumrichter an, um einen synchronen Betrieb der Elektromotoren zu erreichen.
Neben Elektromotoren sind selbstverständlich auch andere Antriebe zur Realisierung der Bewegung der Förderkette innerhalb der Laufschiene nutzbar.

Eine sehr vorteilhafte Ausgestaltung der Erfindung ist auch darin zu sehen, dass die Fördervorrichtung im Bereich der Behälteraufnahme eine Sensorik zur Erfassung des Vorhandenseins oder Nichtvorhandenseins eines Behälters aufweist. Mittels dieser Sensorik ist es möglich, jeweils den aktuellen Zustand der Zuführeinrichtung zu ermitteln. Sofern über die Zuführeinrichtung kein Behälter zugeführt werden kann, ist es beispielsweise denkbar, den Antrieb der Förderkette zu stoppen, um die Bereitstellung des nächstgeeigneten Behälters abzuwarten. Ferner kann durch die Sensorik bestimmt werden, ob eine Halterung frei oder bereits durch einen Behälter besetzt ist.

Unter einer "Sensorik" wird dabei jede Kombination von Messwertaufnehmern und Messwertgebem im Zusammenwirken mit einer zentralen Verarbeitungseinheit (CPU) verstanden. Der Begriff "Sensor" ist im Sinne der Erfindung nicht eng auszulegen. Hierzu geeignet sind jegliche Messwertaufnehmer oder Messwertgeber, die in der Lage sind, ein Signal zu sensieren, das heißt, beispielsweise ein digitales 0-oder 1-Signal oder ein analoges Signal an eine zentrale Verarbeitungseinheit (CPU) weiterzuleiten, das dort umgesetzt werden kann. Als Sensoren können so zum Beispiel auch Lichtschranken zum Einsatz kommen. Die nachfolgende Elektronik zur Verarbeitung derartiger Sensorsignale ist sehr einfach und an sich bekannt.

Darüber hinaus geht eine weitere Lösung dahin, dass die Fördervorrichtung im Bereich der Behälteraufnahme eine Zustelleinrichtung aufweist, die bei einem durch die Sensorik erkannten Behälter diesen Behälter in eine zur Aufnahme durch die Halterung geeignete Position verbringt. Wird beispielsweise über die Zuführeinrichtung ein Behälter bereitgestellt, so erfasst der Sensor diesen Behälter und gibt ein Signal an eine zentrale Verarbeitungseinheit (CPU), die ihrerseits zur Steuerung der Zustelleinrichtung dient. Die Zustelleinrichtung kann somit den Behälter in die zur Aufnahme durch die Halterung geeignete Position versetzen. Darüber hinaus ist nach Aufnahme des Behälters durch die Halterung ein weiteres Signal erzeugbar, dass den Bedarf eines weiteren Behälters signalisiert. Somit kann auch die Zuführung weiterer Behälter über die Zuführeinrichtung durch den Sensor gesteuert werden.

Sinnvollerweise kann die Zustelleinrichtung ein elektrisch, elektromagnetisch, pneumatisch oder hydraulisch betätigter Schieber sein. Mittels des Schiebers ist die Änderung der Position des bereit stehenden Behälters in besonders einfacher Weise möglich. Der durch den Schieber beziehungsweise die Zustelleinrichtung zurückgelegte Weg, um den auch der Behälter verschoben wird, muss so groß gewählt werden, dass die Halterung zuverlässig in die nunmehr ihr zugewandte Öffnung des Behälters eingreifen kann. Die Verwendung einer Sensorik, die über eine zentrale Verarbeitungseinheit die Prozesse der erfindungsgemäßen Fördervorrichtung steuert beziehungsweise regelt, erhöht den Grad möglicher Automatisierung einer entsprechenden Fördervorrichtung. Dies wiederum führt zu erheblichen Einsparungspotenzialen.

Um auch die Entnahme der zur Verfügung gestellten Behälter von den Halterungen zu automatisieren, geht ein weiterer Vorschlag dahin, dass die Fördervorrichtung eine Bestückungsstation, wie sie zuvor bereits eingehend beschrieben wurde, und zusätzlich eine Entnahmestation aufweist. Als Entnahmestation ist dabei ein Teil der Fördervorrichtung anzusehen, in der die an den Halterungen vorhandenen Behälter von den Halterungen entnommen und beispielsweise einem Arbeitsplatz zugeführt werden können.

Entsprechend einer Ausgestaltung der Erfindung ist vorgesehen, dass die Entnahmestation einen Hebelarm zum Abnehmen des Behälters von der Halterung aufweist. Dabei ist es möglich, den abgenommenen Behälter am Ort der Entnahme aufzubewahren.

Eine andere Lösung geht jedoch dahin, dass die Entnahmestation ein Transportband zum Abtransport entnommener Behälter und zumindest einen Sicherungsbügel zur positionierten Anordnung des abgenommenen Behälters auf dem Transportband aufweist. Mit einer derartigen Ausführungsvariante ist es möglich, im Rahmen der Entnahmestation den Behälter von der Halterung zu lösen, was mittels des genannten Hebelarmes erfolgen kann, und diesen anschließend über das Transportband an den nächsten Bedarfsort weiter zu befördern. Der Sicherungsbügel dient dabei der Platzierung des Behälters auf dem Transportband, so dass ein Herunterfallen vermieden werden kann.

Eine weiterführende Idee besteht darin, auch für die Entnahmestation eine Sensorik zum Erfassen des Vorhandenseins oder Nichtvorhandenseins eines Behälters einzusetzen, so dass das von dem Sensor erfasste und in einer zentralen Verarbeitungseinheit (CPU) verarbeitete Signal zur Ansteuerung des Hebelarmes nutzbar ist. Mit dieser Lösung wird folglich der Hebelarm nicht permanent betätigt, sondern lediglich dann, wenn durch den Sensor tatsächlich ein Behälter an einer Haftevorrichtung festgestellt wurde. Ebenso lässt sich mit der Sensorik eine bedarfsgerechte Entnahme der Behälter steuern, das heißt, es wird nur dann ein Behälter von der Halterung abgenommen, wenn dieser vorhanden und/oder an einem Arbeitsplatz benötigt wird. Die Ansteuerung für den Bedarf eines Behälters kann mittels einer elektronischen Steuerung oder manuell durch die an dem betroffenen Arbeitsplatz tätige Person erfolgen.

Das erfindungsgemäße Verfahren zur Bereitstellung eines Behälters für einen Arbeitsprozess mittels der zuvor näher beschriebenen Fördervorrichtung ist durch folgende Verfahrensschritte gekennzeichnet:
- Zuführung wenigstens eines Behälters über eine Zuführeinrichtung zur Bestückungsstation,
- Positionierung des Behälters, so dass die Öffnung des Behälters mindestens einer der Halterungen zugewandt ist,
- Annäherung der Halterung an die Öffnung des Behälters durch Überwindung einer zumindest abschnittsweise vorhandenen relativen Höhendifferenz zwischen der Laufschiene und der Zuführeinrichtung,
- selbsttätiges Aufnehmen des Behälters durch den Eingriff der Halterung in die Öffnung des Behälters infolge der Überwindung der Höhendifferenz.

Das erfindungsgemäße Verfahren weist den wesentlichen Vorteil auf, dass es einfach ausgestaltet ist und die Behälter automatisiert aufnimmt, ohne dass es hierzu einer zusätzlichen Bedienperson bedarf. Mittels der vorhandenen Lauf schiene, an der die Halterungen befestigt sind, die die Behälter aufnehmen, können die Behälter an jeden beliebigen Ort verbracht werden, was auch unter Überwindung von entsprechenden Höhendifferenzen derart möglich ist, dass die Behälter beispielsweise in die Nähe unterhalb der Decke einer Produktionshalle verbracht werden und dort umlaufen, bis sie bei Bedarf an einen Arbeitsplatz zugestellt werden, was wiederum unter Überwindung einer Höhendifferenz realisierbar ist.

Zur Steigerung des Automatisierungsgrades im Rahmen des erfindungsgemäßen Verfahrens wird darüber hinaus vorgeschlagen, dass nach einer sensorischen Erfassung eines in der Fördervorrichtung im Bereich der Behälteraufnahme vorhandenen oder benötigten Behälters das Sensorsignal an eine zentrale Verarbeitungseinheit (CPU) weitergeleitet und dort derart verarbeitet wird, dass eine Zustelleinrichtung nur dann angesteuert wird, wenn ein Behälter vorhanden ist und die Zustelleinrichtung in diesem Fall den Behälter in eine zur Aufnahme durch die Halterung geeignete Position verbringt.

Diese Ausgestaltung des erfindungsgemäßen Verfahrens ist für die Bestückungsstation geeignet. Ebenso kann eine ähnliche Verfahrensgestaltung auch für die Entnahmestation vorgesehen werden, so dass nach einer sensorischen Erfassung eines an der Entnahmestation vorhandenen Behälters das Sensorsignal an eine zentrale Verarbeitungseinheit (CPU) weitergeleitet und dort derart verarbeitet wird, dass ein Hebelarm den Behälter von der Halterung abhebt und dieser Hebelarm nur dann angesteuert wird, wenn ein Behälter vorhanden ist, sodass der abgenommene Behälter abschließend mittels des Hebelarmes zum Abtransport auf ein Transportband verbracht wird.

Die Erfindung wird nachfolgend anhand der beigefügten Zeichnungen näher erläutert. Die gezeigten Ausführungsbeispiele stellen jedoch keine Einschränkung auf die dargestellten Varianten dar, sondern dienen lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: eine schematisch vereinfachte Darstellung einer Bestückungsstation einer erfindungsgemäßen Fördervorrichtung,
- Figur 2:: die Ansicht der Bestückungsstation in Figur 1 in Richtung des Pfeils II in Figur 1,
- Figur 3:: eine vergrößerte und im Teilschnitt dargestellte Führung im Bereich einer Laufschiene,
- Figur 4:: eine separierte Darstellung eines Schnittverlaufes durch eine Laufschiene 1,
- Figur 5:: eine separierte Darstellung einer Halterung mit zwei von der Halterung aufgenommenen Behältern,
- Figur 6:: eine Entnahmestation einer erfindungsgemäßen Fördervorrichtung in einer schematisch vereinfachten Darstellung,
- Figur 7:: einen Teil einer weiteren Ausführungsvariante einer erfindungsgemäßen Fördervorrichtung mit einem Antrieb der Förderkette.

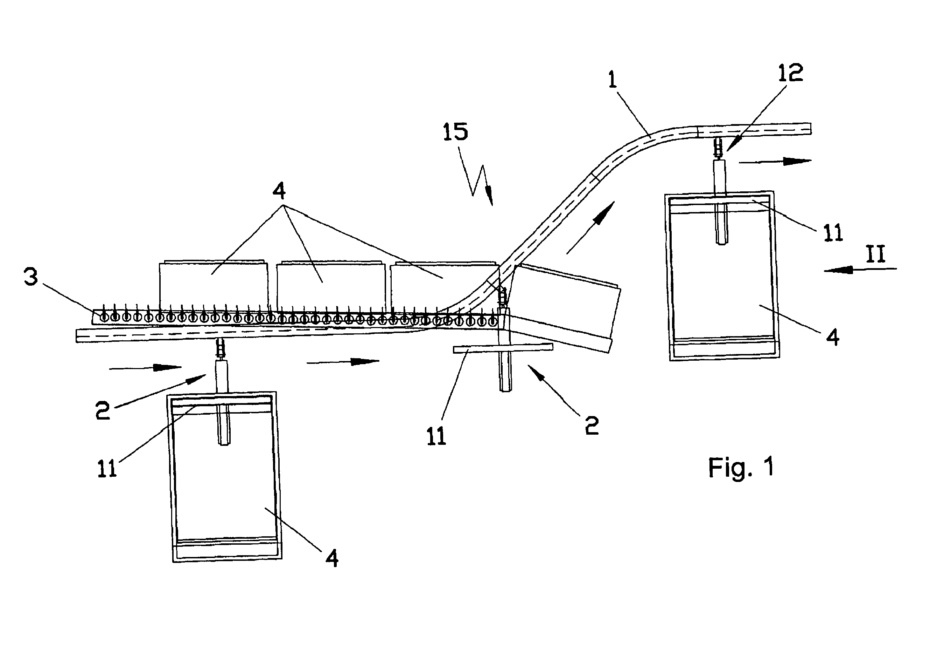

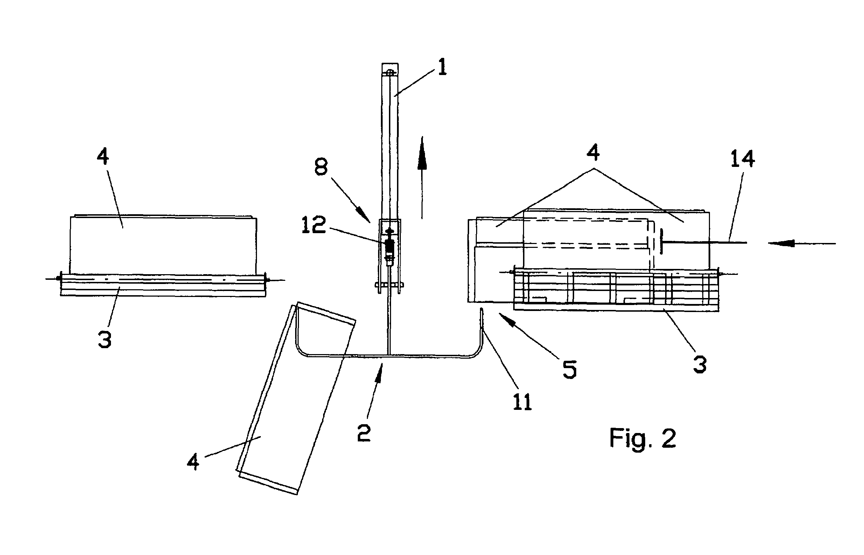

Die in der Figur 1 gezeigte schematisch stark vereinfachte Darstellung einer insgesamt mit 15 bezeichneten Bestückungsstation einer erfindungsgemäßen Fördervorrichtung besteht zunächst aus einer Laufschiene 1, die in der Darstellung der Figur 1 eine Höhendifferenz überwindet. Demgemäß weist die Laufschiene 1, wie hier gezeigt wird, eine annähernd S-förmige Gestalt auf. Ferner besteht die Bestückungsstation 15 aus einer Zuführeinrichtung 3, die im vorliegenden Fall als ein Rollenförderband ausgeführt wurde. Auf dieser Zuführeinrichtung 3 sind hintereinander fortlaufend mehrere Behälter 4 angeordnet. Die Laufschiene 1 geht von einem horizontalen Verlauf aus und steigt im Bereich der Behälteraufnahme um einen wesentlichen Betrag an, um im rechten Bildteil der Figur 1 wieder in einen horizontalen Verlauf überzugehen. Im Bereich der Behälteraufnahme wurde der vorderste Behälter 4 in eine zum Eingriff der Halterung 2 in die Öffnung 5 des Behälters geeignete Position verbracht. Die Halterung 2 weist zur Erleichterung des Eingriffs in die Öffnung 5 des Behälters 4 einen Haken 11 auf. Im laufschienennahen Bereich verfügt die Halterung 2 ferner über ein Gelenk 12, das nachstehend noch näher erläutert wird. Da die Bereitstellung der Behälter 4 für den Arbeitsprozess über die Laufschiene 1 und die daran befestigten Halterungen 2 erfolgt, kann die Zuführeinrichtung 3, welche im Beispiel der Figur 1 als ein Rollenförderband ausgeführt wurde, sehr kurz gehalten werden und muss nicht durch eine komplette Produktionshalle hindurchgeführt werden. Dies macht die vorliegende erfindungsgemäße Fördervorrichtung zu einer sehr kostengünstigen Ausführung. In der Figur 1 ist mit dem Pfeil II eine Ansichtsrichtung der Bestückungsstation verdeutlicht, die der Darstellung der Figur 2 entspricht. Aus dieser Sicht betrachtet, wird erkennbar, dass die gezeigte Bestückungsstation 15 zwei, im vorliegenden Fall parallel nebeneinander verlaufende Zuführeinrichtungen 3 aufweist. Die Laufschiene 1 ist zwischen diesen Zuführeinrichtungen 3 angeordnet. Beide Zuführeinrichtungen 3 sind in dem gezeigten Beispiel als Rollenförderbänder ausgeführt. Die mit der Laufschiene 1 umlaufenden Halterungen 2 weisen endseitig zu jeder Seite der Zuführeinrichtungen 3 einen Haken 11 auf. Somit sind die Halterungen 2 in diesem Endabschnitt als Doppelhaken gestaltet. Der Figur 2 ist entnehmbar, dass die Halterung 2 auf der linken Seite einen Behälter 4 trägt und sich im rechten Bildteil in einer Position befindet, die kurz vor der Aufnahme eines weiteren Behälters an dem zweiten Haken 11 der Halterung 2 steht. Hierzu ist im rechten Bildteil angedeutet, dass die Zustelleinrichtung 14 den Behälter 4 in Richtung auf die Laufschiene 1 zu bewegt. Somit wird die nach unten gerichtete Öffnung 5 des Behälters 4 geringfügig über den Rand der Zuführeinrichtung 3 hinausgeschoben. Dies ermöglicht den Eingriff des Hakens 11 des Trägers 2 in die Öffnung 5 des Behälters 4. Die Zustelleinrichtung 14 wurde vorliegend als ein einfacher Stempel ausgeführt, dessen Ansteuerung über eine zentrale Verarbeitungseinheit (CPU) erfolgt, so dass die Zustelleinrichtung 14 nur dann eine Bewegung vollzieht und einen Behälter 4 zuführt, wenn auch tatsächlich auf der Zuführeinrichtung 3 ein geeigneter Behälter zur Verfügung steht.

Falls auf der Zuführeinrichtung 3 kein Behälter vorhanden sein sollte, wird vom Sensor ein O-Signal an die CPU weitergegeben und über diese die Zustelleinrichtung 14 deaktiviert. Eine erfindungsgemäße Fördervorrichtung weist den entscheidenden Vorteil auf, dass die Halterungen 2 sowohl einseitig als auch an mehreren Seiten Behälter 4 aufnehmen können. Folglich kann Platz sparend eine große Anzahl Behälter transportiert und aufbewahrt werden. Dadurch lassen sich Lagerhaltungsprobleme um ein Vielfaches reduzieren.

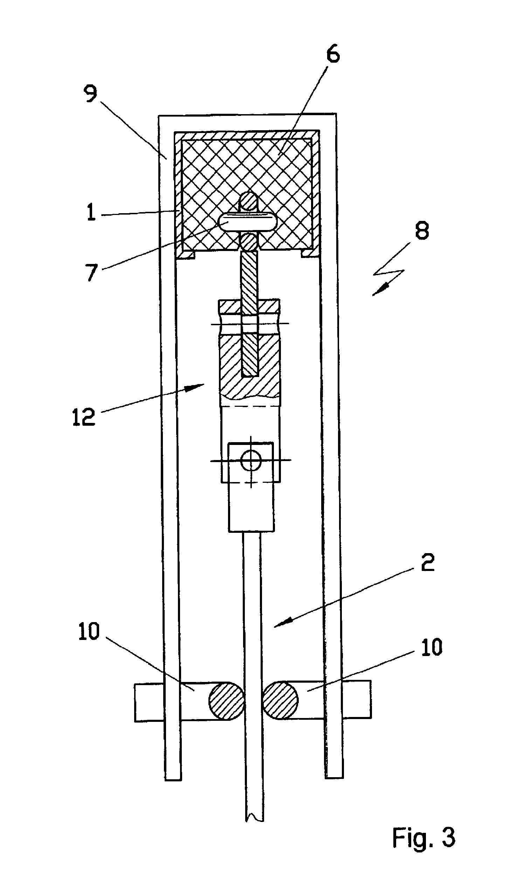

In der Figur 3 ist vergrößert und im Teilschnitt eine Führung 8 dargestellt, wie sie zur Positionierung der Halterungen 2 zum Einsatz kommen kann. Im oberen Bildteil der Figur 3 ist die Laufschiene 1 im Schnitt gezeigt. Innerhalb der Laufschiene 1 ist ein Kunststoffprofil 6 angeordnet. Dieses Kunststoffprofil 6 verfügt über eine Führungskontur, in der eine Förderkette 7 gleitend geführt ist. Die Förderkette 7 weist an ihrem unteren Ende die Halterung 2 auf. Die Halterung 2 besteht ihrerseits aus mehreren unterschiedlichen Bereichen. So ist in dem laufschienennahen Abschnitt der Halterung 2 ein Kreuzgelenk 12 vorhanden, das im vorliegenden Fall aus zwei beabstandet zueinander und in sich kreuzender Richtung verlaufenden Achsen besteht. Diese Achsen sind in einem Gabelkopf untergebracht, der insgesamt die Verbindung zwischen der Förderkette 7 und der Halterung 2 darstellt. Die Halterung 2 ist mittels des Kreuzgelenkes 12 in mehreren Freiheitsgraden beweglich.

Die insgesamt mit 8 bezeichnete Führung weist ferner einen Haltebügel 9 auf, der in seinem unteren Bereich zwei, in Einführungsrichtung der Halterung betrachtet, aufeinander zu laufende Führungsbügel 10 aufweist. Diese Führungsbügel 10 verfügen somit über eine Geometrie, die ein ungehindertes Einführen der Halterung 2 zwischen die Führungsbügel 10 ermöglicht, wobei die Führungsbügel 10 die eingeführte Halterung 2 in eine annähernd vertikale Position verbringen, so dass auch eine einseitig mit einem Behälter ausgestattete Halterung 2 in der Lage ist, einen weiteren Behälter sicher und zuverlässig aufzunehmen.

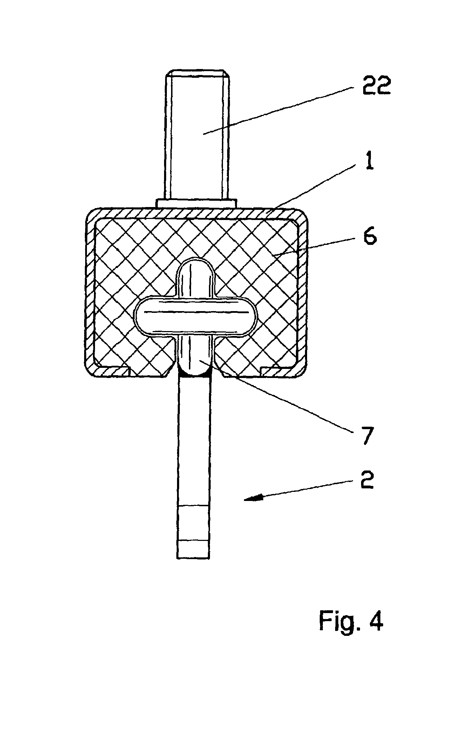

Eine Einzelheit der Laufschiene 1 ist in der Figur 4 gezeigt. Die Laufschiene 1 nimmt in ihrem Innenraum ein Kunststoffprofil 6 auf, das eine Führung für eine Förderkette 7 bildet. Im oberen Bereich der Darstellung in Figur 4 ist an der Laufschiene 1 ein Anschlussgewinde 22 vorhanden, das zur Befestigung der Laufschiene 1 an hierzu geeigneten Trägem dient. Die Förderkette 7 ist mittels einer Schweißverbindung mit einem Anschlussbereich zur Befestigung der Halterung 2 versehen. Dieser Anschlussbereich ragt aus dem Kunststoffprofil 6 und der darin vorhandenen Führung der Förderkette 7 heraus.

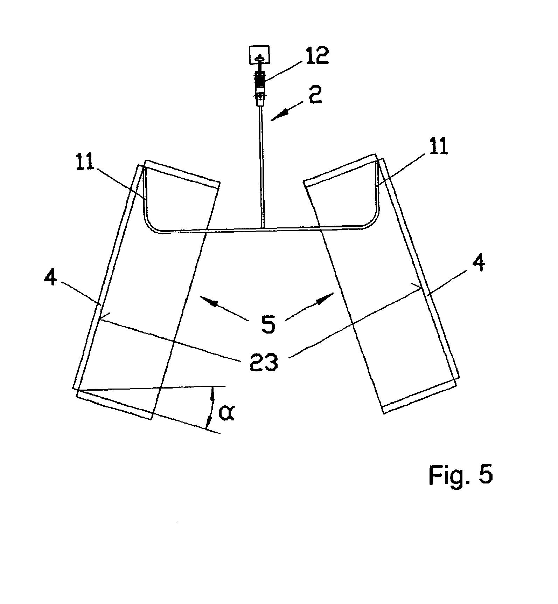

Die Figur 5 zeigt eine weitere Besonderheit der erfindungsgemäßen Fördervorrichtung. So ist die dargestellte Halterung 2 derart gestaltet, dass sie an ihrem Ende zwei einander gegenüber liegend angeordnete Haken 11 aufweist. Die Halterung 2 ist an der Förderkette 7 über ein Kreuzgelenk 12 befestigt. Die Haken 11 nehmen je einen Behälter 4 auf, wobei die Besonderheit darin besteht, dass die Haken 11 bis in den Bereich des Bodens 23 der Behälter 4 in die Behälter 4 eingreifen. Dies hat zur Folge, dass die Behälter 4 in einer zur Horizontalen geneigten Position an den Haken 11 der Halterung 2 aufgehängt sind. Diese um einen Winkel α von der Horizontalen abweichende, geneigte Aufhängung der Behälter 4 ermöglicht es, dass in den Behältern gegebenenfalls vorhandene Flüssigkeit ablaufen kann und sich nicht in den Behälterinnenräumen sammelt. Darüber hinaus kann auch durch die Umgebung in die Behälter eingebrachte Feuchtigkeit problemlos wieder aus den Behältern abgeführt werden, ohne dass es hierzu zusätzlicher Arbeitsleistungen bedarf.

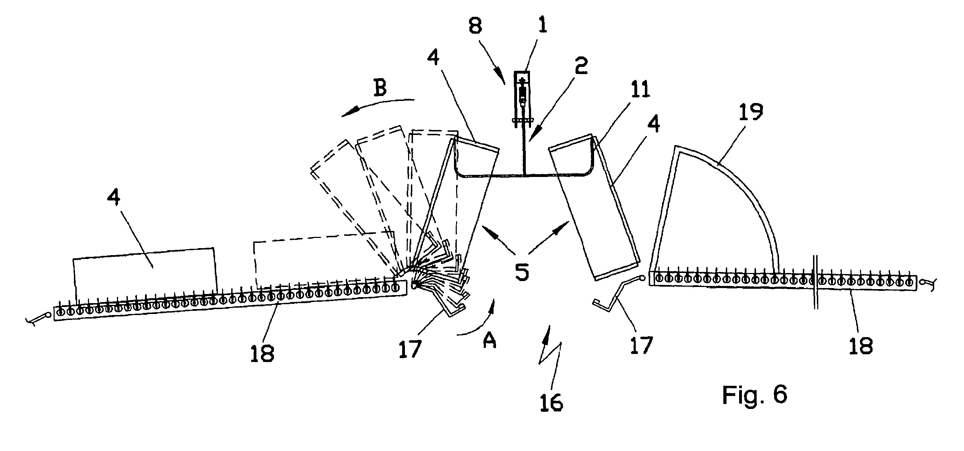

In der Figur 6 ist eine insgesamt mit 16 bezeichnete Entnahmestation einer erfindungsgemäßen Fördervorrichtung schematisch vereinfacht dargestellt. Zwischen zwei in entgegen gesetzter Richtung verlaufenden Transportbändern 18 ist zentral die Laufschiene 1 angeordnet. Auch im Bereich der Entnahmestation 16 weist diese Laufschiene 1 eine Führung 8 auf, die die Halterung 2 in eine annähernd vertikale Position ausrichtet. Die Halterung 2 verfügt endseitig über zwei einander gegenüberliegend angeordnete Haken 11, die jeweils einen Behälter 4 tragen. Eine Besonderheit der Transportbänder 18 besteht darin, dass diese im Übergabebereich der Behälter 4 mit einem Sicherungsbügel 19 ausgestattet sein können, wie dies in der Figur 6 nur einseitig angedeutet ist. Dieser Sicherungsbügel 19 dient der positionierten Ablage des Behälters 4 auf dem Transportband 18. Der Hebel 17 wird über einen Sensor von einer zentralen Verarbeitungseinheit (CPU) gesteuert. Seine Betätigung erfolgt nur dann, wenn an der Halterung 2 tatsächlich ein Behälter 4 sensiert wurde und somit vorhanden ist. Anderenfalls bleibt der Hebelarm 17 in seiner Ausgangsposition, unabhängig davon, ob eine Halterung 2 an dieser Position vorbeigeführt wird oder nicht. Befindet sich an dem Haken 11 der Halterung 2 ein Behälter 4, so wird dies durch den Sensor erfasst und das entsprechende Signal an die CPU weitergegeben, die daraufhin den Hebelarm 17 in Richtung des Pfeiles A in Figur 6 verschwenkt. Damit wird der Behälter 4 von dem Haken 11 der Halterung 2 abgehoben und gelöst, so dass er zwischen die vorhandenen Bügel des Sicherungsbügels 19 eingeführt und damit positioniert auf dem Transportband 18 abgelegt werden kann. Das Transportband 18 dient der Förderung des Behälters 4 an den entsprechenden Arbeitsplatz, an dem er benötigt wird.

Im linken Bildteil der Figur 6 sind durch gestrichelte Linien mehrere Positionen des Behälters 4, von einer Ausgangslage ausgehend, in der er am Haken 11 der Halterung 2 hängend angeordnet ist, bis in seine endgültige Position, unmittelbar auf dem für den Abtransport vorgesehenen Transportband 18, dargestellt. Der Behälter 4 wird dabei in Richtung des Pfeiles B bewegt. Zur Bewegungsumsetzung dient in der zuvor beschriebenen Weise der Hebelarm 17.

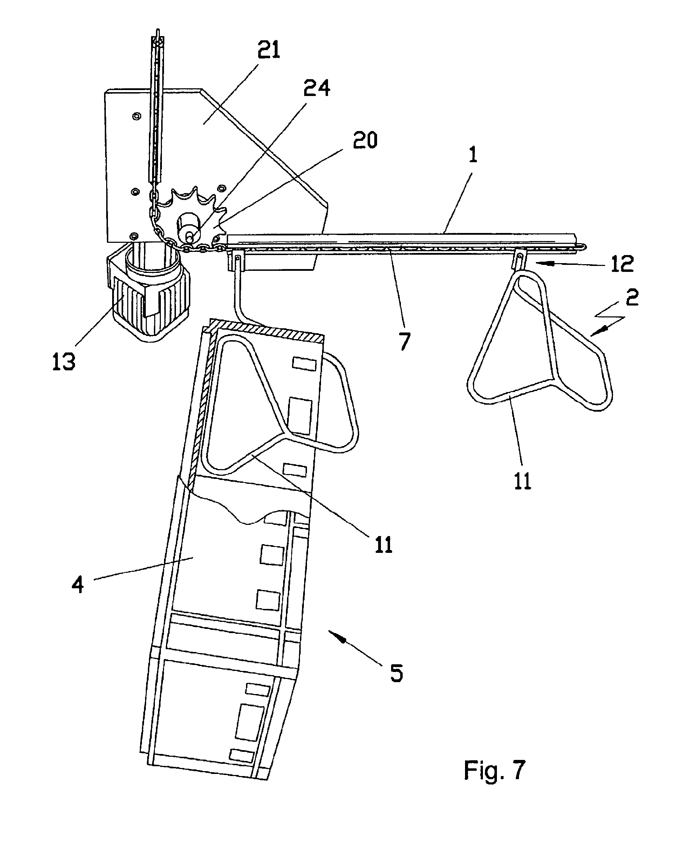

In der Figur 7 ist ausschnittsweise eine weitere Variante einer erfindungsgemäßen Fördervorrichtung gezeigt. Die Besonderheit dieser Lösung besteht darin, dass die Haken eine andere Gestaltung aufweisen als in den zuvor beschriebenen Ausführungen. So handelt es sich bei den Haken 11 der Halterungen 2 um einseitige Haken, das heißt, an einem derartigen Haken 11 kann nur ein Behälter aufgehängt werden. Der Eingriff eines derartigen Hakens 11 einer Halterung 2 in einen teilweise im Schnitt gezeigten Behälter 4 ist ebenfalls aus der Figur 7 entnehmbar. Der Haken 11 greift dabei in ähnlicher Weise, wie es zuvor bereits bei den anderen Ausführungsbeispielen beschrieben wurde, bis an den Boden 23 des Behälters 4 in die Öffnung 5 des Behälters 4 ein. Dies hat zur Folge, dass der Behälter 4 mit einer Neigung zur Horizontalen an dem Haken 11 aufgehängt ist. Der Haken 11 selber verfügt in seinem laufschienenseitigen Abschnitt über ein Gelenk 12. Innerhalb der Laufschiene 1 ist eine Förderkette 7 innerhalb eines Kunststoffprofils 6 gleitend geführt. Als Antrieb 13 der Förderkette 7 dient ein Elektromotor, der zusammen mit einem Übersetzungsgetriebe, welches aus der Darstellung der Figur 7 nicht erkennbar ist, an einer Befestigungsplatte 21 angebracht ist. Das Übersetzungsgetriebe überträgt die Drehbewegung des Antriebs 13 auf eine Antriebswelle 24, die die Befestigungsplatte 21 durchdringt. Auf der Unterseite der Befestigungsplatte 21 befindet sich ein auf der Welle 24 befestigtes Ritzel 20, dessen Zähne unmittelbar in die Förderkette 7 eingreifen und somit eine Übertragung der Drehbewegung von dem Antrieb 13 auf die Förderkette 7 ermöglichen. Aus der Figur 7 geht auch eine Möglichkeit der Umlenkung des Laufschienensystems hervor, die im vorliegenden Fall etwa 90° beträgt. Zur Realisierung dieser Umlenkung wurde das Ritzel 20 unmittelbar in diesem Bereich angeordnet.

### Bezugszeichenliste

- 1.: Laufschiene
- 2.: Halterung
- 3.: Zuführeinrichtung
- 4.: Behälter
- 5.: Öffnung
- 6.: Kunststoffprofil
- 7.: Förderkette
- 8.: Führung
- 9.: Haltebügel
- 10.: Führungsbügel
- 11.: Träger oder Haken
- 12.: Gelenk
- 13.: Antrieb
- 14.: Zustelleinrichtung
- 15.: Bestückungsstation
- 16.: Entnahmestation
- 17.: Hebelarm
- 18.: Transportband
- 19.: Sicherungsbügel
- 20.: Ritzel
- 21.: Befestigungsplatte
- 22.: Anschlussgewinde
- 23.: Boden
- 24.: Welle

## Patentansprüche

1. Fördervorrichtung für Behälter mit einer Laufschiene (1), die einen in sich geschlossenen Umlauf bildet sowie mit mehreren, beabstandet zueinander in oder an der Laufschiene (1) geführten Halterungen (2),
**dadurch gekennzeichnet, dass**
der Laufschiene (1) mindestens eine Zuführeinrichtung (3) zur Bereitstellung der Behälter (4) zugeordnet ist, wobei die Behälter (4) eine jeweils mindestens einer der Halterungen (2) derart zugewandte Öffnung (5) aufweisen, dass ein selbsttätiges Aufnehmen eines Behälters (4) durch den Eingriff der Halterung (2) in die Öffnung (5) des Behälters (4) ermöglicht ist, weil die Laufschiene (1) zumindest abschnittsweise eine Höhendifferenz zu der zugeordneten Zuführeinrichtung (3) aufweist.

2. Fördervorrichtung nach Anspruch 1,
**dadurch gekennzeichnet, dass**
die Höhendifferenz durch einen Anstieg der Laufschiene (1) oder durch einen Abfall der Zuführeinrichtung (3) gebildet ist.

3. Fördervorrichtung nach einem der vorstehend genannten Ansprüche,
**dadurch gekennzeichnet, dass**
die Laufschiene (1) ein Kunststoffprofil (6) mit einer gleitend darin geführten Förderkette (7) aufweist.

4. Fördervorrichtung nach einem der vorstehend genannten Ansprüche,
**dadurch gekennzeichnet, dass**
die Laufschiene (1) zumindest im Bereich der Behälteraufnahme eine bügelförmige Führung (8) zur Durchführung und annähernd vertikalen Positionierung der Halterungen (2) aufweist.

5. Fördervorrichtung nach Anspruch 4,
**dadurch gekennzeichnet, dass**
die Führung (8) aus einem mit der Laufschiene (1) verbundenen Haltebügel (9) und mindestens einem die Halterung (2) in die vorgesehene Position zwingenden Führungsbügel (10) besteht.

6. Fördervorrichtung nach einem der vorstehend genannten Ansprüche,
**dadurch gekennzeichnet, dass**
die Halterungen (2) einen Träger oder Haken (11) bilden oder aufweisen.

7. Fördervorrichtung nach einem der vorstehend genannten Ansprüche,
**dadurch gekennzeichnet, dass**
die Halterungen (2) in ihrem laufschienennahen Bereich ein Gelenk (12) aufweisen.

8. Fördervorrichtung nach Anspruch 7,
**dadurch gekennzeichnet, dass**
das Gelenk (12) ein Kreuzgelenk ist.

9. Fördervorrichtung nach einem der vorstehend genannten Ansprüche,
**dadurch gekennzeichnet, dass**
die Fördereinrichtung einen Antrieb (13) aufweist.

10. Fördervorrichtung nach einem der vorstehend genannten Ansprüche,
**dadurch gekennzeichnet, dass**
die Fördereinrichtung im Bereich der Behälteraufnahme eine Sensorik zur Erfassung des Vorhandenseins oder nicht Vorhandenseins eines Behälters (4) aufweist.

11. Fördervorrichtung nach Anspruch 10,
**dadurch gekennzeichnet, dass**
die Fördereinrichtung im Bereich der Behälteraufnahme eine bei einem durch die Sensorik erkannten Behälter (4) den Behälter (4) in eine zur Aufnahme durch die Halterung (2) geeignete Position verbringende Zustelleinrichtung (14) aufweist.

12. Fördervorrichtung nach Anspruch 11,
**dadurch gekennzeichnet, dass**
die Zustelleinrichtung (14) ein elektrisch, elektromagnetisch, pneumatisch oder hydraulisch betätigter Schieber ist.

13. Fördervorrichtung nach einem der vorstehend genannten Ansprüche,
**dadurch gekennzeichnet, dass**
die Zuführeinrichtung (3) ein Förderband ist.

14. Fördervorrichtung nach einem der vorstehend genannten Ansprüche,
**dadurch gekennzeichnet, dass**
die Fördervorrichtung eine Bestückungsstation (15) und eine Entnahmestation (16) aufweist.

15. Fördervorrichtung nach Anspruch 14,
**dadurch gekennzeichnet, dass**
die Entnahmestation (16) einen Hebelarm (17) zum Abnehmen des Behälters (4) von der Halterung (2) aufweist.

16. Fördervorrichtung nach Anspruch 14 oder 15,
**dadurch gekennzeichnet, dass**
die Entnahmestation (16) ein Transportband (18) zum Abtransport entnommener Behälter (4) und zumindest einen Sicherungsbügel (19) zur positionierten Auflage des abgenommenen Behälters (4) auf das Transportband (18) aufweist.

17. Fördervorrichtung nach einem der Ansprüche 15 oder 16,
**dadurch gekennzeichnet, dass**
mittels einer Sensorik das Erfassen des Vorhandenseins oder nicht Vorhandenseins des Behälters (4) ermöglicht und das vom Sensor in einer zentralen Verarbeitungseinheit (CPU) erfasste Signal zur Ansteuerung des Hebelarmes (17) nutzbar ist.

18. Verfahren zur Bereitstellung eines Behälters für einen Arbeitsprozess mittels einer Fördervorrichtung nach einem der vorstehend genannten Ansprüche, **gekennzeichnet durch** folgende Verfahrensschritte:
- Zuführung wenigstens eines Behälters (4) über eine Zuführeinrichtung (3) zur Bestückungsstation (15),
- Positionierung des Behälters (4), sodass die Öffnung (5) des Behälters (4) mindestens einer der Halterungen (2) zugewandt ist,
- Annäherung der Halterung (2) an die Öffnung (5) des Behälters (4) **durch** Überwindung einer zumindest abschnittsweise vorhandenen Höhendifferenz zwischen der Laufschiene (1) und der Zuführeinrichtung (3),
- selbsttätiges Aufnehmen des Behälters (4) **durch** den Eingriff der Halterung (2) in die Öffnung (5) des Behälters (4).

19. Verfahren zur Bereitstellung eines Behälters für einen Arbeitsprozess nach Anspruch 18,
**dadurch gekennzeichnet, dass**
nach einer sensorischen Erfassung eines in der Zuführeinrichtung (3) im Bereich der Behälteraufnahme vorhandenen Behälters (4) das Sensorsignal an eine zentrale Verarbeitungseinheit (CPU) weitergeleitet und dort derart verarbeitet wird, dass eine Zustelleinrichtung (14) nur dann angesteuert wird, wenn ein Behälter (4) vorhanden ist und die Zustelleinrichtung (14) in diesem Fall den Behälter (4) in eine zur Aufnahme durch die Halterung (2) geeignete Position verbringt.

20. Verfahren zur Bereitstellung eines Behälters für einen Arbeitsprozess nach Anspruch 18 oder 19,
**dadurch gekennzeichnet, dass**
nach einer sensorischen Erfassung eines an der Entnahmestation vorhandenen Behälters (4) das Sensorsignal an eine zentrale Verarbeitungseinheit (CPU) weitergeleitet und dort derart verarbeitet wird, dass ein Hebelarm (17) den Behälter (4) von der Halterung (2) abhebt und der Hebelarm (17) nur dann angesteuert wird, wenn ein Behälter (4) vorhanden ist und der abgenommene Behälter (4) abschließend mittels des Hebelarmes (17) auf ein Transportband (18) zum Abtransport verbracht wird.
